Europäisches Patentamt

European Patent Office

Office européen des brevets

(11) Publication number: **0 172 748**
A1

# EUROPEAN PATENT APPLICATION

(21) Application number: **85305909.5**

(22) Date of filing: **20.08.85**

(51) Int. Cl.⁴: **F 16 H 11/06**

(30) Priority: **24.08.84 JP 175984/84**

(43) Date of publication of application:
**26.02.86 Bulletin 86/9**

(84) Designated Contracting States:
**CH DE FR GB IT LI NL**

(71) Applicant: **FUJI JUKOGYO KABUSHIKI KAISHA
7-2 Nishishinjuku 1-chome Shinjuku-ku
Tokyo(JP)**

(72) Inventor: **Takano, Toshio
1-3-2 Sakae-cho Hamuramachi
Nishitama-gun Tokyo(JP)**

(74) Representative: **Kirk, Geoffrey Thomas et al,
BATCHELLOR, KIRK & EYLES 2 Pear Tree Court
Farringdon Road
London EC1R 0DS(GB)**

(54) Control system for an infinitely variable transmission.

(57) A control system for an infinitely variable belt-drive transmission for an engine has a drive pulley (24) having a hydraulically shiftable disc (24a), a driven pulley (28) having a hydraulically shiftable disc (28a), a belt (26) engaged with both pulleys, and a hydraulic control circuit having a pump (36, 37) for supplying oil to shift the discs (24a, 28a). A transmission ratio control valve (44) is provided in the control circuit and responsive to engine speed for controlling the flow of oil to the disc 24a of the drive pulley for shifting the disc of the drive pulley to change to transmission ratio. A pressure regulator valve (43) is provided to respond to the transmission ratio for controlling the line pressure in the hydraulic circuit. An accumulator (60) is provided to supply the oil to the hydraulic cylinder (28b) of the driven pulley (28) when the pressure in that cylinder decreased undesirably.

./...

FIG. 2

## Control System for an Infinitely Variable Transmission.

The present invention relates to a transmission control system for an infinitely variable belt-drive automatic transmission for a vehicle.

U.S. patent 4,152,947 discloses a control system for an infinitely variable transmission.

An infinitely variable belt-drive transmission for a motor vehicle comprises an endless belt running over a drive pulley and a driven pulley. Each pulley comprises a movable conical disc which is axially moved by a fluid operated servo device so as to vary the running diameter of the belt on the pulley in dependence on driving conditions. The servo devices are supplied with fluid from a hydraulic control system. The system is provided with an oil pressure regulator valve, a transmission ratio control valve, and an oil pump to pump the oil at pressure. Each valve has a spool to control the oil supplied to the servo devices.

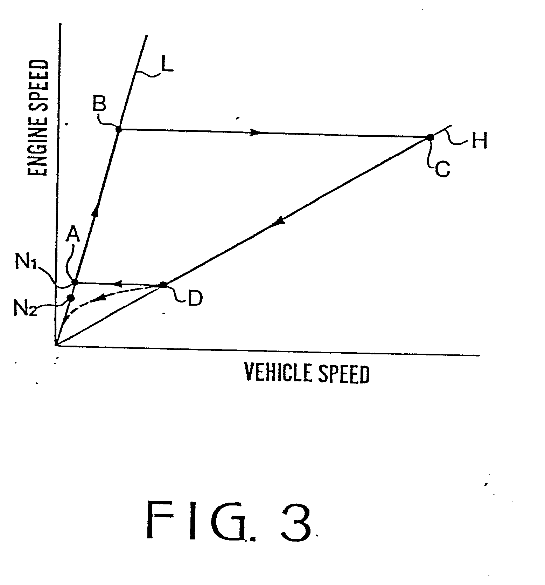

The drive pulley has a pitot pressure generating device as an engine speed sensor, for producing pitot pressure dependent on engine speed. The pitot pressure increases with increase of engine speed and is applied to one axial end of the spool of each valve to urge the spool. The pressure regulator valve is so arranged as to decrease the line pressure of the hydraulic control circuit with the increase of the pitot pressure and the decrease of the transmission ratio. To the other end of the spool of the transmission ratio control valve, a spring load is applied dependent on the depression of an accelerator pedal of the motor vehicle. Thus, the spool of the transmission ratio control valve is positioned at a location where the pitot pressure and the spring load balances so as to determine the transmission ratio depending on engine operating conditions. When the engine is idling, the line pressure is regulated to the highest pressure by the regulator valve and the line pressure is not applied to the servo device of the drive pulley. Accordingly, transmission ratio is set at the highest value. Under such a condition, when engine speed increases with the depression of the accelerator pedal, the motor vehicle is started by the engagement of an electromagnetic clutch. When the engine speed reaches to a predetermined speed (for example a point B in Fig. 3), the spool of the transmission ratio control valve is shifted in the upshift direction by increased pitot pressure, so that the transmission ratio starts to change to decrease the ratio (upshifting). If engine speed is kept constant, the transmission ratio continuously decreases. Accordingly, vehicle speed increases, even if the accelerator pedal is not depressed. At the lowest transmission ratio, when the depression of the accelerator pedal is decreased, the vehicle speed decreases along the lowest transmission ratio line H with decrease of the engine speed. When the engine speed reaches a predetermined low speed (point D), the transmission ratio starts to change to higher ratio (downshift). Accordingly, if th.. engine speed is kept constant, the vehicle speed decreases.

As described above, the vehicle speed changes at a constant engine speed by automatic upshifting and downshifting of the transmission.

In such a control system, if the motor vehicle is Braked hard, to decelerate the vehicle rapidly, in downshift operation between points D and A, the engine speed is decreased by the reduction of the vehicle speed below an engine idling speed $N_2$ as shown by dashed line in Fig. 3. Accordingly, the rotational speed of the oil pump is inevitably decreased, so that the volume of oil pumped by the pump reduces to decrease the pressure of the oil supply.

However, in order to continuously downshift the transmission, it is necessary that the oil pump operates reliably to supply the oil to the servo device of the driven pulley at a constant pressure. Further, under such low oil pressure, if the accelerator pedal is rapidly depressed so as to rapidly accelerate the vehicle, the belt slips on pulleys because of low pressure of the servo devices of the pulleys against the belt. In order to prevent such disadvantages, it is necessary to increase the capacity of the oil pump. However, it is uneconomic to provide an oil pump having a large capacity sufficient to supply a necessary amount of oil at a constant pressure, even if the engine speed decreases below the idling speed.

The present invention seeks to provide a system which operates to compensate for the reduction of the performance of an oil pump at rapid deceleration of a motor vehicle without increasing the capacity of the pump.

Accordingly the present invention provides a control system for an infinitely variable transmission for transmitting the power of an internal combustion engine mounted on a vehicle, the transmission comprising a drive pulley having a hydraulically shiftable disc and a hydraulic cylinder for shifting the disc, a driven pulley having a hydraulically shiftable disc and a hydraulic cylinder for shifting the disc, a belt engaged with both pulleys, the system comprising a hydraulic circuit having a pump for supplying oil, a transmission ratio control valve responsive to engine speed for controlling the flow of oil to the hydraulic cylinder of the drive pulley for shifting the disc of the drive pulley to change the transmission ratio, and a pressure regulator valve responsive to the transmission ratio for increasing the line pressure of the hydraulic circuit with increase of the transmission ratio, characterised by, an accumulator provided to supply the oil to the hydraulic cylinder of the driven pulley when the oil pressure in the cylinder decreases below a predetermined pressure.

A preferred embodiment of the present invention will now be described by way of example, with reference to the accompanying drawings, wherein:

Figure 1 is a schematic illustration of an infinitely variable belt-drive transmission;

Figure 2 is a schematic diagram showing a control system according to the preferred embodiment of the present invention; and

Figure 3 is a graph showing transmission characteristics of the system of Figure 2.

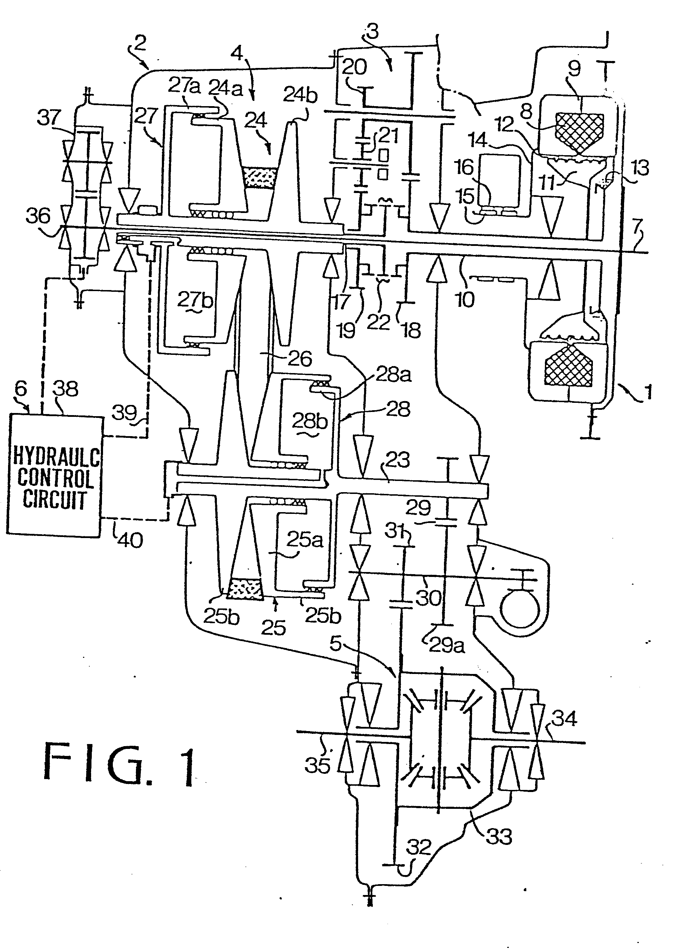

Referring to Figure 1, the infinitely variable belt-drive automatic transmission for a motor vehicle to which the present invention is applied, comprises an electromagnetic powder clutch 1, an infinitely variable belt-drive transmission 2, including a selector mechanism 3, pulleys and belt device 4, and final reduction device 5, and an oil control circuit 6. A crankshaft 7 of an engine (not shown) is connected to an annular drive member 9 of the electromagnetic powder clutch 1. The electromagnetic powder clutch comprises a coil 8 provided in the drive member 9, a driven member 11 having its outer periphery spaced from the inner periphery of the drive member 9 by a gap 12, and a powder chamber 13 defined between the drive member 9 and driven member 11. In the powder chamber 13, powder of magnetic material is provided. The driven member 11 is secured to an input shaft 10 of the belt-drive transmission. A holder 14 secured to the drive member 9 carries slip rings 15 which are electrically connected to the coil 8. The coil 8 is supplied through brushes 16 and slip rings 15 with control current from a electronic control circuit.

When the magnetizing coil 8 is excited by clutch current, the drive member 9 is magnetized to produce a magnetic flux passing through the driven member 11. The magnetic powder is aggregated in the gap 12 by the magnetic flux and the driven member 11 is engaged with the drive member 9 by the powder. On the other hand, when the clutch current is cut off, the drive and driven members 9 and 11 are disengaged from one another.

In the belt-drive transmission 2, the selector device 3 is provided between the input shaft 10 and a main shaft 17. The main shaft 17 is cylindrical and is disposed coaxially with the input shaft 10. The selector device 3 comprises a drive gear 18 integral with input shaft 10, reverse driven gear 19 rotatably mounted on the main shaft 17, and a synchronizer 22 mounted on the main shaft 17. The drive gear 18 meshes with one of gears of a counter gear assembly 20. Another gear of the counter gear assembly 20 engages with an idler gear 21, which in turn engages with the driven gear 19.

The synchronizer 22 has a well known mechanism and comprises a hub secured to the main shaft 17, and a synchronizer sleeve slidably engaged to the hub with splines. The synchronizer sleeve is adapted to engage with splines of the drive gear 18 or with splines of driven gear 19.

At a neutral position (N range) of a selector lever (not shown), the synchronizer 22 does not engage either gear, so that the main shaft 17 is disconnected from the input shaft 10. When the synchronizer is engaged with the gear 18, the input shaft 10 is connected to the main shaft 17 through the synchronizer to provide a driving position (D range).

When the synchronizer is engaged with the gear 19, the input shaft 10 is connected to the main shaft 17 through gears 18, 20, 21 and 19 to provide a reverse driving position (R range).

The main shaft 17 has an axial passage in which an oil pump driving shaft 36 connected to crankshaft 7 is mounted. An output shaft 23 is provided in parallel with the main shaft 17. A drive pulley 24 and a driven pulley 25 are mounted on shafts 17 and 23 respectively. A fixed conical disc 24b of the drive pulley 24 is integral with main shaft 17 and an axially movable conical disc 24a is axially slidably mounted on the main shaft 17. The movable conical disc 24a also slides in a cylinder 27a formed on the main shaft 17 to provide a servo device 27. A chamber 27b of the servo device 27 communicates with an oil pump 37 through a passage 39 and a control circuit 38. The oil pump 37 is a gear pump driven by the shaft 36.

A fixed conical disc 25b of the driven pulley 25 is formed on the output shaft 23 opposite the movable conical disc 24a and an axially movable conical disc 25a is slidably mounted on the shaft 23 opposite disc 24b. Movable conical disc 25a has a cylindrical portion 25c in which a piston portion 28a of the output shaft 23 is slidably engaged to form a servo device 28. A chamber 28b of the servo device 28 is communicated with the oil pump 37 through a passage 40 and control circuit 38. A drive belt 26 engages with the drive pulley 24 and the driven pulley 25.

Secured to the output shaft 23 is a drive gear 29 which engages with an intermediate reduction gear 29a on an intermediate shaft 30. An intermediate gear 31 on the shaft 30 engages with a final gear 32. Rotation of the final gear 32 is transmitted to axles 34 and 35 of the vehicle driving wheels through a differential 33.

The pressure oil control circuit 38 is responsive to engine speed and throttle valve position for controlling the oil supply to servo devices 27 and 28 thereby moving discs 24a and 25a.

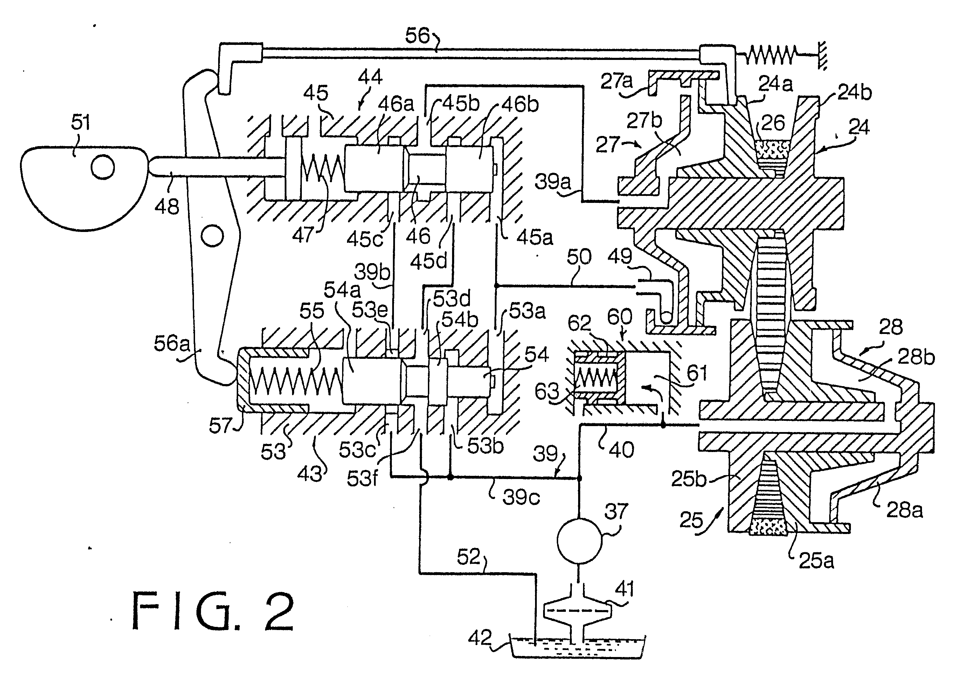

Referring to Fig. 2, chamber 27b of servo device 27 is supplied with pressurized oil by the oil pump 37 from an oil reservoir 42 via a filter 41, conduit 39, pressure regulator valve 43 and transmission ratio control valve 44. The chamber 28b of servo device 28 is applied with pressurized oil at a secondary pressure through passage 40 without passing through valves 43 and 44. The movable conical disc 24a of the drive pulley 24 is so designed that the pressure receiving area thereof is larger than that of movable conical disc 25a of the driven pulley 25. The fixed conical disc 24b has an annular groove filled with oil in which a pitot pipe 49 is provided. Thus, the speed of the oil in the groove (that is engine speed) is measured by the pitot pipe as pitot pressure.

The transmission ratio control valve 44 comprises a valve body 45, spool 46, spring 47 for urging the spool in the downshift direction, and actuating member 48 for the spool 46 and the spring 47. The actuating member 48 engages a shift cam 51. The shift cam 51 is operatively connected to an accelerator pedal of the motor vehicle so as to be rotated in dependence on the magnitude of depression of the pedal. A port 45b of the valve 44 is selectively communicated with a pressure oil supply port 45c or a drain port 45d in accordance with the position of lands 46a and 46b of spool 46. Port 45b communicates with chamber 27b through a conduit 39a, and port 45c communicates with pressure regulator valve 43 through a conduit 39b. The drain port 45d communicates with the oil reservoir 42 through ports 53d and 53f and a conduit 52. An end chamber 45a of the transmission ratio control valve 44 is supplied with the pitot pressure from the pitot pipe 49 provided in the drive pulley 24 through a passage 50.

Thus, the spool 46 is shifted in dependence on the pitot pressure dependent on the engine speed and on the pressure by the spring 47 dependent on the magnitude of depression of the accelerator pedal. The amount of oil supplied to the chamber 27b increases with increase of engine speed to provide the upshift of the transmission.

The pressure regulator valve 43 comprises a valve body 53, spool 54, and a spring 55 for urging the spool 54 in one direction. The pressure oil supplied through a conduit 39c and a port 53b is applied to land 54b of the spool 54, so that the spool 54 is moved to the left by the oil pressure at the port 53b. The other end of spring 55 engages with a slidable spring retainer 57 which is moved through an arm 56a and a rod 56. The rod 56 engages the disc 24a of the drive pulley 24 for detecting transmission ratio during operation. A port 53c connected with conduit 39c communicates with a conduit 39b through an annular groove 53e and communicates with port 53f in accordance with the position of a land 54a.

A first end chamber 53a of the pressure regulator valve 43 is supplied with the pitot pressure from the pitot pipe 49 through the passage 50. Accordingly, the spool 54 is subject to the pitot pressure, the pressure supplied to the chamber 28b, and the force of the spring 55 dependent on the transmission ratio. When the engine speed increases, the pitot pressure increases. Thus, the spool 54 is shifted to the left to communicate port 53c with drain port 53f, so that the line pressure decreases. On the other hand, as the transmission ratio increases, the rod 56 moves to the left to rotate the arm 56a in the counterclockwise direction. Thus, the spool 54 is shifted to the right, so that the line pressure is increased. Accordingly, the belt 26 is always held by proper pressure of movable discs 24a and 25a in accordance with the transmission ratio.

An accumulator 60 is provided for accumulating the oil in the conduit 40 connecting the pump 37 and the chamber 28b of the servo device 28 of the driven pulley 25. The accumulator 60 comprises an accumulator chamber 61 having a predetermined capacity, piston 62 slidably provided in the chamber 61, and spring 63 for urging the piston 62 into the chamber 61. The load of the spring 63 is set to such a value so that the spring is compressed by the secondary pressure in the conduit 40 and to such a value as to discharge the oil in the chamber 61 when the secondary pressure decreases below a predetermined pressure which is a value at the point D in the Fig. 3. The chamber 61 is located near the chamber 28b so as to reduce the resistance to the oil supplied from the chamber 61 to chamber 28b.

In operation, while the vehicle is stopped, chamber 28b of the driven pulley is supplied with the secondary pressure through conduit 40, and the chamber 27b of the drive pulley is drained. Since the pitot pressure is zero, the spool 46 is at the right end position by virtue of the spring 47. Thus, in the pulley and belt device 4 of the infinitely variable belt-drive transmission 2, the driving belt 26 engages with the driven pulley 25 at a maximum running diameter to provide the largest transmission ratio (low speed stage). When the accelerator pedal is depressed, the electromagnetic powder clutch 1 is excited by a clutch current, transmitting the engine power to the drive pulley 24. The power of the engine is transmitted to the output shaft 23 at the largest transmission ratio by the driving belt 26 and driven pulley 25, and further transmitted to axles of the driving wheels through the final reduction device 5. Thus, the vehicle is started.

At that time, the line pressure is at the highest value by the pressure regulator valve 43. The pitot pressure increases with increase of the engine speed. The cam 51 pushes the actuating member 48 in dependence on the depression of the accelerator pedal. Engine speed increases from a point A and along the largest transmission ratio line L in Fig. 3, so that the pitot pressure increases. When the pitot pressure exceeds a predetermined value, the spool 54 of the pressure regulator valve 43 is shifted to the left to communicate port 53c with port 53f to decrease the line pressure. On the other hand, when the force dependent on the pitot pressure becomes higher than the force of the spring 47, the spool 46 of the transmission ratio control valve is moved to the left to communicate the port 45c with port 45b. Accordingly the line pressure is applied to the chamber 27b to move the disc 24a. Thus, the transmission ratio begins to change to a small value. The transmission ratio varies from a point B on the largest transmission ratio line L.

Since the line pressure is supplied to the chamber 27b, the distance between the conical discs of the drive pulley 24 gradually decreases, so that the running diameter of driving belt 26 increases gradually to reduce the transmission ratio. When the disc 24a moves to the right, the rod 56 is also moved to the right, so that spool 54 is moved to the left by the line pressure and the pitot pressure. Accordingly, port 53c communicates with port 53f to discharge the oil to the oil reservoir 42 to decrease the line pressure.

When the accelerator pedal is released at point C, the spool 46 is shifted to the left by the pitot pressure, so that the line pressure is supplied to the drive pulley servo chamber 27b to keep the transmission ratio minimum. Thus, engine speed reduces from point C and along the line H of the minimum transmission ratio together with vehicle speed. When the engine speed decreases to a low value, the pitot pressure decreases, so that the spring 47 acts to shift the spool 46 to the right. Thus, the drive pulley servo chamber 27b is drained, so that transmission is downshifted from point D.

When the vehicle is braked hard during the downshifting operation and the secondary pressure decreases below the predetermined value, the piston 62 of accumulator 60 moves to the right to discharge the oil in the chamber 61. Thus, the reduction of the oil to be supplied to the chamber 28b due to the reduction of engine speed can be compensated to keep the secondary pressure constant.

While the presently referred embodiment of the present invention has been shown and described, it is to be understood that this disclosure is for the purpose of illustration and that various changes and modifications may be made without departing from the scope of the invention as set forth in the appended claim.

CLAIMS:

1. - A control system for an infinitely variable transmission for transmitting the power of an internal combustion engine mounted on a vehicle, the transmission comprising a drive pulley having a hydraulically shiftable disc and a hydraulic cylinder for shifting the disc, a driven pulley having a hydraulically shiftable disc and a hydraulic cylinder for shifting the disc, a belt engaged with both pulleys, the system comprising a hydraulic circuit having a pump (36, 37) for supplying oil, a transmission ratio control valve (44) responsive to engine speed for controlling the flow of oil to the hydraulic cylinder of the drive pulley for shifting the disc of the drive pulley to change the transmission ratio, and a pressure regulator valve (43) responsive to the transmission ratio for increasing the line pressure of the hydraulic circuit with increase of the transmission ratio, characterised by, an accumulator (60) provided to supply the oil to the hydraulic cylinder of the driven pulley when the oil pressure in the cylinder decreases below a predetermined pressure.

2. A control system as claimed in claim 1 wherein the accumulator has an accumulator chamber (61) communicating with a conduit between the pump (36, 37) and the hydraulic cylinder, a piston (62) slidable in the accumulator chamber (61), and a spring (63) for urging the piston into the chamber (61).

3.        A transmission for a vehicle, incorporating a control system, the transmission comprising a drive pulley having a hydraulically shiftable disc and a hydraulic cylinder for shifting the disc, a driven pulley having a hydraulically shiftable disc and a hydraulic cylinder for operating the disc, a belt engaged with both pulleys, the system comprising a hydraulic circuit having a pump (36, 37) for supplying oil, a transmission ratio control valve (44) responsive to engine speed for controlling the flow of oil to the drive pulley for shifting the disc of the drive pulley to change the transmission ratio, and a pressure regulator valve (43) responsive to the transmission ratio for increasing the line pressure of the hydraulic circuit with increase of the transmission ratio, characterised by: an accumulator (60) provided to supply the oil to the hydraulic cylinder of the driven pulley when the oil pressure in the cylinder decreases below a predetermined pressure.

**FIG. 1**

0172748

FIG. 2

FIG. 3

# EUROPEAN SEARCH REPORT

**European Patent Office**

0172748 Application number

| | | | |
|---|---|---|---|
| **DOCUMENTS CONSIDERED TO BE RELEVANT** | | | EP 85305909.5 |

| Category | Citation of document with indication, where appropriate, of relevant passages | Relevant to claim | CLASSIFICATION OF THE APPLICATION (Int. Cl. 4) |
|---|---|---|---|
| X | <u>DE - A - 1 964 035</u> (MONFORTS)<br>* Totality * | 1,3 | F 16 H 11/06 |
| X | <u>GB - A - 2 092 685</u> (ALFA ROMEO)<br>* Totality * | 1,3 | |
| A | <u>DE - A1 - 2 538 404</u> (BORG-WARNER)<br>* Totality * | 2 | |

| TECHNICAL FIELDS SEARCHED (Int. Cl. 4) |
|---|
| F 16 H 9/00 |
| F 16 H 11/00 |
| F 16 H 37/00 |
| F 15 B 1/00 |

The present search report has been drawn up for all claims

| Place of search | Date of completion of the search | Examiner |
|---|---|---|
| VIENNA | 14-11-1985 | SCHATEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82